# EUROPEAN PATENT APPLICATION

(11) **EP 4 516 698 A1**
(43) Date of publication of application: **05.03.2025**
(21) Application number: 23194707.8
(22) Date of filing: 31.08.2023
(51) Int. Cl.: B65G 1/04

(54) **SERVICE VEHICLE FOR USE IN A WAREHOUSE SYSTEM FOR THREE-DIMENSIONAL ARRANGEMENT OF STORAGE BINS**

(71) Applicant: VOLUME Lagersysteme GmbH, 01067 Dresden (DE)
(72) Inventor: Voloskov, Mikhail, 01067 Dresden (DE); Preußer, Martin, 01067 Dresden (DE)
(74) Representative: Laqua, Bernd Christian Kurt

(57) **Abstract**

The present disclosure relates to a service vehicle (300) for use in a warehouse system comprising at least one storage module (100) having a storage area (102) adapted to accommodate a plurality of stacks of storage bins, and a top level (104) arranged above the storage area (102). The service vehicle (300) is configured for movement at the top level (104) of the storage module (100) and comprises rollers (310) engageable in rails (110) extending at the top level (104), and a platform (320) for carrying an operator, the platform designed for carrying the operator in a lying position. When the rollers (310) engage in the top level rails (110) of the storage module (100), the service vehicle (300) is movable along said rails (110) at the top level (104) of the storage module (100) with an operator carried by the platform (320).

## Description

### Technical Field

The present disclosure generally relates to the field of maintenance and troubleshooting means for compact warehouse systems. More particularly, the present disclosure relates to a service vehicle usable by an operator for maintenance and/or troubleshooting tasks and/or actions in a compact warehouse system providing space for a three-dimensional arrangement of storage bins, and a compact warehouse system including such service vehicle.

### Background

In the industry, warehouses are used to store large amounts of goods in an organized manner. Warehouse systems typically employed nowadays encompass a variety of types of storage systems ranging from simple storage racks, allowing the storage of totes in horizontal rows with multiple levels where shuttle vehicles or small load stacker cranes are employed to retrieve totes from the racks, to compact warehouse systems that rather focus on the efficient use of available space in a warehouse.

Automated warehouse systems, such as the one disclosed in WO 2014/075937 A1, are one example of compact warehouse systems. As shown in Figure 6, such warehouse systems may comprise a grid structure 600 of storage cells, wherein each storage cell is arranged to accommodate a vertical stack of storage bins 602. At a top level of the grid structure, one or more robots 604 (or, more generally, "vehicles") may move horizontally to receive and place storage bins 602 from and to the stacks of the storage cells, i.e., by raising storage bins 602 from the stacks to the top level or lowering storage bins 602 from the top level down onto the stacks, respectively. A bin lift 606 integrated into the grid structure 600 may receive a storage bin 602 from a robot 604 at the top level and convey the storage bin 602 in a vertical direction down to a handover station 608. Such warehouse systems are offered by AutoStore (http://www.autostoresystem.com), for example.

Such systems require maintenance and may also require cleaning and/or rescue of a bin and/or vehicle stuck in the system structure. In WO 2015/140216 A1, a robotic service device for use on a robotic picking system grid is described, which is capable of driving to any location of the grid to perform maintenance operations or cleaning. Additionally, the service device may be used to rescue robotic load handling devices operational in the picking system. Moreover, in WO 2020/151866 A1, WO 2021/078582 A1, WO 2021/300616 A1, WO 2021/078582 A1 and WO 2022/106346 A2, service vehicles for movement on a rail system of an automated storage and retrieval system are described, the service vehicles configured to bring a malfunctioning remotely operated container handling vehicle to a service area outside of the rail system. Such service device and vehicles allow an operator to sit and/or stand on the device/vehicle in order to carry out maintenance actions.

Thus, at present, compact warehouse systems need to provide the necessary height above the grid on which bin transporting vehicles operate to store and/or retrieve bins into and from the system for maintenance reasons in order to allow the above-mentioned service device/vehicles to operate on the system. However, with the aim to use the available space for storage, the height available above the grid preferably is only such that the bin transporting vehicles can operate, which usually is less than the height of a sitting or standing operator. Thus, there is a need for service vehicles of a more compact dimension.

### Summary

It is therefore an object of the present disclosure to provide a service vehicle of a more compact dimension for a compact warehouse system.

According to a first aspect of the present disclosure, a service vehicle for use in a compact warehouse system is provided. The compact warehouse system for which the service vehicle is designed preferably comprises at least one storage module comprising a storage area and a top level arranged above the storage area. The storage area is adapted to accommodate a plurality of stacks of storage bins arranged in a horizontal two-dimensional grid at a bottom of the storage module. At the top level, at least one vehicle is movable in alignment with the two-dimensional grid to retrieve and place storage bins from and to the plurality of stacks. A plurality of such storage modules can be interconnected preferably in a stacked arrangement of at least two levels of storage modules placed one above the other in an individual room. In such a stacked arrangement of storage modules, the top level of the lower module has a height delimited by a bottom of the upper module and a service module when occupied by an operator has to have an overall height dimension of less than the height of the lower module top level. The limited height of the top level preferably is less than the height of a sitting or standing person, and, especially, equal to or less than 1m, preferably equal to or less than 80cm.

Generally and irrespective of use in a compact warehouse system having one or more storage modules in any desired interconnected configuration, a service vehicle according to the first aspect and claim 1 is configured for accommodation of an operator and for movement at the top level of the storage module and comprises rollers engageable in rails extending at the top level, wherein said rails are preferably the rails in which a transporting vehicle as described in the background section above and usable with the compact warehouse system is engageable. Moreover, the service vehicle comprises a platform designed for carrying an operator in a lying position to allow the operator, in the lying position, to perform maintenance or other tasks and actions necessary to be performed in the warehouse system to ensure its reliable operation. Such tasks and/or actions may include cleaning, servicing of at least one of system components, transport vehicles operating on the top level and bins stored in the module(s). Thus, when the rollers engage in the rails of the top level of one of the storage modules, the service vehicle is movable along said top level rails with an operator carried by the platform. When the service vehicle has reached a target position, it is possible to lock the rollers against further movement. The service vehicle may comprise a roller locking mechanism for locking at least one of the rollers against rotation. Especially, for a stacked arrangement of storage modules, the service vehicle is movable along the rails of the lower level storage module top level with an operator carried by the platform, wherein the operation range of the operator then is delimited in height by the delimited height of the lower level storage module top level.

The service vehicle may comprise a vehicle control (or "control system") for controlling movement and/or operation of the vehicle. The service vehicle can comprise at least one sensor adapted to determine a position of the service vehicle within the warehouse system and especially a position on the rail grid of the top level. At least one sensor of the service vehicle may also be adapted to detect the environment around the service vehicle. At least one of the at least one sensor may be a camera. The vehicle control may also communicate with a main control of the warehouse system and, thus, receive signals of sensors present within the warehouse system. Thereby, the vehicle control may cause blocking of at least an area in which the service vehicle is present in the warehouse system and/or a movement path of the service vehicle in the warehouse system for other vehicles, irrespective of being another service vehicle or a vehicle for retrieving bins from and storing bins in the warehouse system. Especially, presence of a service vehicle within a top level of a storage module of the warehouse system may cause blockage of the whole storage module top level at least for all bin retrieving and storing vehicles in the warehouse system.

The vehicle control can be designed to selectively allow manually operated or drive controlled movement of the vehicle. When the service vehicle is manually operated, drive control is not active but, when drive control is active, the service vehicle does not allow manual operation, and, in case of the user manually interacting with the system to move the service vehicle, it is conceivable that the service vehicle stops drive control so as to allow the operator to take over manual operation of the service vehicle or that an acoustic or visual alarm is output to remind the operator of drive control being active.

Thus, movement of the service vehicle at the storage module top level can be caused manually by the operator pushing and/or pulling him-/herself and, thus, the service vehicle carrying the operator along the top level rails by grasping sections or components of the top level and/or of a bottom of an upper module if present. Alternatively, movement of the service vehicle may be drive controlled. For drive control, at least one roller can be a motor-driven roller, wherein preferably at least one pair of rollers is motor-driven. For drive-controlled movement, there may be provided a handheld control device to be controlled by the operator when carried by the platform and/or there may be a remote control device to be controlled from outside the warehouse system.

The roller locking mechanism may be designed for manual actuation, for example by means of a lever or button, and manual de-activation, for example by the operator applying a rotational force on the rollers by pushing and/or pulling him-/herself and, thus, the service vehicle, in a movement direction of the rollers, the applied force overcoming a predetermined rotational force threshold up to which movement of the service vehicle is withheld, or by the operator again actuating the lever or button or any other conceivable manual actuation means used to active the roller locking mechanism.

For a service vehicle allowing for drive-controlled movement, the vehicle control may be programmed to provide for automatic service vehicle retrieval from a position within the top level of the warehouse system to an access position of the top level, i.e., automatic return to a starting point on which the operator entered the service vehicle. Such an automatic return is especially advantageous in case of emergency, i.e., when the operator on the service vehicle has to be rescued from a position within the warehouse system not accessible from outside the warehouse system, namely from a position different from the starting point at which the operator entered the warehouse system with the service vehicle. Accordingly, in any case of emergency, when the operator is not able to return to the starting point manually or by him-/herself controlling the vehicles drive control, an automatic emergency return of the service vehicle with the operator to the starting point is possible. The warehouse system control may especially comprise an automatic retrieval control for the service vehicle, which may be sensor-based or remoted controlled. For example, the service vehicle may comprise sensors for detecting one or more emergency situations, e.g., when the operator fainted and/or is motionless and can no longer control the service vehicle and/or in case of fire in the warehouse system. The control then is adapted to communicate with these sensors. Alternatively or additionally, the control may communicate with a main control (or "control system") of the warehouse system, wherein the latter may communicate with sensors present within the warehouse system, such as fire detection sensors and/or low oxygen level detection sensors. Thus, for detecting a fire emergency situation or a low level of oxygen emergency situation within a warehouse system, for example, but also in other emergency situations, the service vehicle control may be adapted to rely on sensor signals from within the warehouse system. When the control allows remote control, there may be an emergency button outside the warehouse system which can be pressed by a person when detecting an emergency situation. When a service vehicle is emergency retrieved from the warehouse system, its movement speed is preferably reduced compared to a movement speed the service vehicle moves at during drive control when there is no emergency situation.

Preferably, the service vehicle further comprises a base, wherein the rollers are mounted to the base so as to movably support the base especially on the top level rails and wherein the platform is mounted to the base such that the base supports the platform. The platform may be movably and especially rotatably mounted to the base. Preferably, the platform has a length extension along a first axis extending between a first end and an opposite second end thereof and a width extension along a second axis extending between a first side and an opposite second side thereof. Rotation of the platform may then be defined as rotation about a platform rotation axis perpendicular to a plane defined by the first and second axis of the platform, especially, a surface of the platform, such as the surface for carrying the operator, and may especially extend through a center point of the surface of the platform. Preferably, the platform plane is parallel to a plane defined by the top level grid and/or rails and, in case of a stacked arrangement of storage modules, parallel to a bottom of an upper level storage module. It is especially conceivable to define first and second engagement positions of the platform relative to the base, with unintended rotation of the platform being inhibited when the platform is in either one of its first and second engagement positions. The first and second engagement positions can be 90° apart from one another. In other words, the first axis of the platform when in the first engagement position is perpendicular to the first axis of the platform when in the second engagement position. For example, in the first engagement position, the platform can either be oriented with the first end thereof at 0° or 180° and, in the second engagement position, the platform can either be oriented with the first end thereof at 90° or 270°. Generally, rotation of the platform allows a broader operation range for an operator carried on the platform.

Fixation of the platform against rotation in each of the first and second engagement positions is releasable, wherein it is conceivable that the platform can be released to allow rotation either by an automated control or also manually by the operator carried on the platform. For manual release, the service vehicle can, for example, comprise release means, such as a lever or button, manually actuatable by the operator.

In view of the aim that the service vehicle is usable in a compact warehouse system which may have a stacked arrangement of storage modules as described above, it is especially advantageous that the platform is adapted to support the operator in a lying position, wherein the term "lying position" shall cover a person's position when lying on the back, stomach or side. Especially, the platform can be ergonomically designed to support a lying person, and, for example, may be provided with a head support, such as a cushion. The head support may especially be designed to support a person's back of the head, a side of the head or even a person's face, wherein, especially in the latter case, the head support may be an O- or U-shaped cushion. It is also conceivable that the head support of the platform only is a head support for the operator when lying on his/her back or side but is a breast support for the operator when lying on his/her stomach. When lying on his/her stomach, the operator's face may then preferably be at a position beyond a first or second end edge of the platform so that the operator has sight into a lower section of the storage module. To allow for such sight even when the operator's head does not extend beyond the platform's first or second end edge, the platform may have a cutout or viewing window in a section faced by the operator's face when the operator is lying on his/her stomach, such as, for example, within the interior of the O- or U-shaped cushion. For the operator's hands having access to said lower section of the storage module it is conceivable that the operator is lying on the platform with his/her shoulders at a head-end edge of the platform - which may be either the first or second end of the platform depending on the orientation of the operator on the platform - and/or that the platform is shaped and/or its width is dimensioned, at least in side sections of a first and/or second end portion of the platform, where an upper part and/or head of the operator's body is present, in a manner to allow the operator's hands to perform maintenance or other tasks below a platform level of the service module when positioned on the rails of the storage module top level such as in the storage area of the storage module. Thus, the platform may have a corresponding shape and/or width dimension in a section adjacent each of the first and second ends of the platform.

The rails of the storage module top level preferably extend in a grid-like manner in perpendicular directions. To allow the service module to move along either said perpendicular directions, the rollers are preferably pivotable relative to the base so as to allow selective movement of the service vehicle in either said perpendicular directions. Preferably, rotation of the platform relative to the base is operatively connected to pivoting of the rollers, i.e., in other words, a platform rotation mechanism provided for rotational coupling of the platform to the base and a roller pivoting mechanism provided for pivotal coupling of the rollers to the base are operatively connected such that rotation of the platform relative to the base causes the rollers to pivot relative to the base and/or pivoting of the rollers relative to the base causes rotation of the platform relative to the base.

The operative connection of the platform and the rollers such that rotation of the platform relative to the base causes the rollers to pivot relative to the base is especially conceivable for a manual operation of the service vehicle by the operator. The operator can manually cause rotation of the platform by pushing and/or pulling him-/herself and, thus, the platform carrying the operator around the platform rotation axis by grasping sections or components of the top level and/or of a bottom of an upper module if present. For the platform being fixed in one of its engagement positions, the operator may either have to overcome a rotational force threshold to rotate the platform out of its present engagement position or may have to manually actuate the release means. Due to the operative connection of the platform and the rollers, by rotating the platform the operator can easily change movement direction of the rollers and, thus, of the service vehicle.

The operative connection of the platform and the rollers such that pivoting of the rollers relative to the base causes rotation of the platform relative to the base is especially conceivable for the service vehicle being drive controlled. When the rollers are controlled to pivot in order to change movement direction, the platform carrying the operator automatically performs a corresponding rotation. Such rotation may provide an indication to the operator carried on the platform that movement will continue in a perpendicular direction. Fixation of the platform against rotation out of its first or second engagement position may be automatically released by the drive control.

The service vehicle may further comprise limbs securing means. These limbs securing means may be actuatable, preferably pneumatically actuatable, to move from a non-securing position to a securing position relative to the platform. In the non-securing position, the limbs securing means may not limit the operating range of an operator carried by the platform. In the securing position, the limbs securing means are adapted to limit an operating range of the operator carried by the platform, preferably especially in lateral directions, i.e., limit the width extension of the operator range and/or a space occupiable by the operator on the platform, by causing limbs of the operator positioned outside the limits of the limited operating range set by the limbs securing means when in securing position to be led into said limits. The limbs securing means are especially useful in an emergency situation, for example, when the operator is motionless with his/her limbs in a position ("outside" the service vehicle and/or in interaction with the warehouse system prior to becoming motionless and still resting in this position) where automatic service vehicle retrieval would cause harm on the limbs.

The limbs securing means may be movably mounted to the platform. It may comprise at least one barrier selectively positionable to laterally limit the space occupiable by the operator on the platform, i.e., selectively movable into the securing position. Especially, at least one limbs securing barrier can be pivotably mounted to a surface of the platform in a first lateral region of the platform extending in a direction parallel to a longitudinal axis of the platform and at least one limbs securing barrier can be pivotably mounted to the surface of the platform in a second lateral region opposite the first lateral region and extending in a direction parallel to the longitudinal axis of the platform, the surface carrying the operator when present on the vehicle.

The limbs securing means may comprise actuating means for moving and especially for pivoting the barriers from the non-securing position to the securing position. The actuating means preferably are pneumatic actuating means and comprise at least one inflatable cushion and may further comprise a gas pressure accumulator, such as a carbon dioxide pressure accumulator and especially a carbon dioxide pressure bottle, fluidly connectable to the at least one inflatable cushion for immediately inflating the at least one cushion to move the limbs securing means into the securing position, if required, e.g., in an emergency situation. Preferably, the actuating means comprise at least one inflatable cushion per limbs securing barrier, with each inflatable cushion directly or at least indirectly, for example, via another inflatable cushion, fluidly connectable to the gas pressure accumulator. For regulating pressure force with which the at least one inflatable cushion is inflated, the pneumatic actuating means preferably further comprises one or more valves in communication with the gas pressure accumulator and the one or more inflatable cushions. For example, it is conceivable to implement a valve in a common section of a pressure line in communication with the gas pressure accumulator and the one or more inflatable cushions or one valve in each individual pressure line section branching from the common pressure line section. In case of an individual pressure line per cushion, one valve could of course be implemented in each said individual pressure line in communication with the gas pressure accumulator and one cushion. Thus, the one or more valves allow for a controlled inflation of the one or more cushions, preventing an explosive inflation as it is known for airbags in vehicles.

According to a second aspect of the present disclosure, an (e.g., compact) warehouse system comprising at least one above-described service vehicle is provided. The warehouse system may comprise the above-described features. According to claim 14, it comprises at least one storage module having a storage area adapted to accommodate a plurality of stacks of storage bins, and a top level arranged above the storage area as well as the at least one above-described service vehicle.

The warehouse system may comprise at least two storage modules connected to each other in a stacked two-level arrangement one above to the other with a height of the top level of the lower storage module being delimited by a bottom of the upper storage module. The above-described service vehicle is especially designed for such a compact warehouse system, wherein, for the service vehicle being positioned on the top level of the lower storage module, a dimension of the service vehicle is such that a space available between the platform of the service vehicle and the bottom of the upper storage module does not allow the operator to sit or stand on the platform. Rather, as described above, the service vehicle is designed to carry the operator in a lying position.

By using the service vehicle, an operator can, for example, fix a defect of a bin storing and retrieving vehicle within the warehouse system, free a stuck bin storing and retrieving vehicle within the warehouse system, perform maintenance work on structural and functional components of the warehouse system and/or free a bin stuck in the warehouse system.

### Brief Description of the Drawings

In the following, aspects of the present disclosure will be described in more detail, also with reference to the accompanying drawings, in which:
- Figure 1A: illustrates a perspective view of a single storage module of a warehouse system with a service vehicle carrying an operator present on a top level of the storage module and an operator-carrying platform of the service vehicle being in a first rotational position relative to a base of the service vehicle;
- Figure 1B: illustrates a top view of the illustration of Fig. 1A;
- Figure 1C: illustrates a top view of the illustration of Fig. 1A with the platform of the service vehicle being in a second rotational position relative to the base of the service vehicle;
- Figure 2A: illustrates a side view of a stacked configuration of two levels of storage modules of a warehouse system with a service vehicle carrying an operator present on a top level of the lower storage module limited in height by a bottom of the upper storage module;
- Figure 2B: illustrates a rear view of the illustration of Fig. 2A;
- Figure 2C: illustrates a top view of the illustration of Fig. 2A;
- Figure 3A: illustrates a side view of the service vehicle shown throughout Figs. 1A to 2C in the second rotational position shown in Fig. 1C;
- Figure 3B: illustrates a rear view of the illustration of Fig. 3A;
- Figure 3C: illustrates a top view of the illustration of Fig. 3A;
- Figure 3D: illustrates a perspective bottom view of the illustration of Fig. 3A;
- Figure 3E: illustrates a perspective top view of the illustration of Fig. 3A;
- Figure 3F: is an enlarged illustration of the encircled section of Fig. 3E;
- Figure 4A: illustrates a rear view of the service vehicle shown throughout Figs. 1A to 2C in the first rotational position shown in Figs. 1A, 1B and 2A to 2C;
- Figure 4B: illustrates a side view of the illustration of Fig. 4A;
- Figure 4C: illustrates a top view of the illustration of Fig. 4A;
- Figure 4D: illustrates a perspective bottom view of the illustration of Fig. 4A;
- Figure 4E: illustrates a perspective top view of the illustration of Fig. 4A;
- Figure 4F: is an enlarged illustration of the encircled section of Fig. 4E;
- Figure 5A: illustrates the service vehicle 300 of Fig. 4C provided with limbs securing means, with the limbs securing means in a non-securing position;
- Figure 5B: illustrates the service vehicle of Fig. 5A with the limbs securing means in a securing position;
- Fig. 5C: illustrates a side view of the illustration of Fig. 5B;
- Fig. 5D: illustrates a rear view of the illustration of Fig. 5B;
- Fig. 5E: is an enlarged illustration of the encircled section of Fig. 5D; and

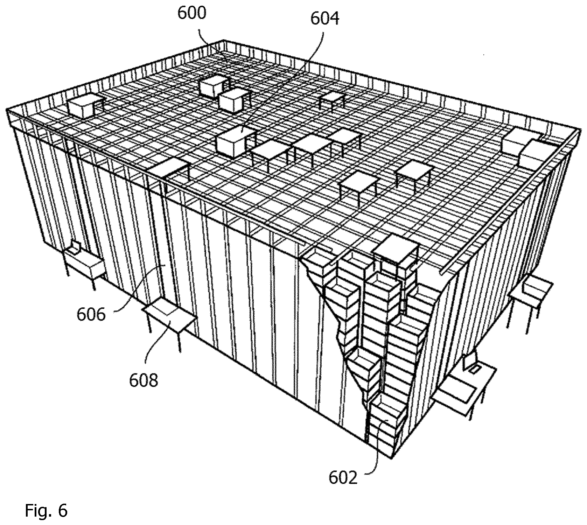

- Fig. 6: illustrates a perspective view of a warehouse system with a three-dimensional arrangement of storage bins according to the prior art.

### Detailed Description

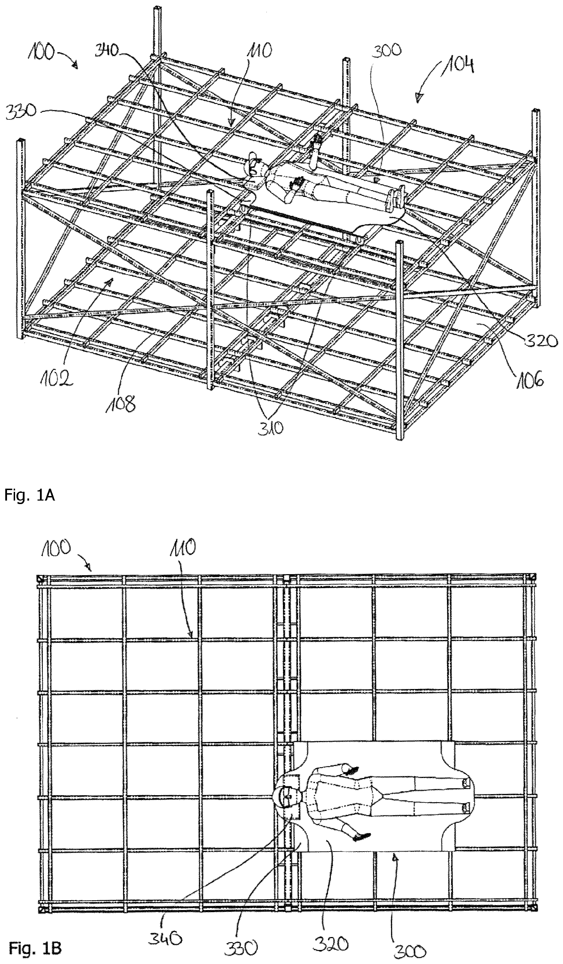

In the following description, for purposes of explanation and not limitation, specific details are set forth in order to provide a thorough understanding of the present disclosure. It will be apparent to one skilled in the art that the present disclosure may be practiced in other implementations that depart from these specific details. According to a first aspect helping to understand the present disclosure, Figure 1A shows a single storage module 100 of a warehouse system providing space for a three-dimensional arrangement of storage bins, wherein the warehouse system may comprise additional storage modules 100 interconnected with the one shown in a common level and/or in a stacked arrangement in at least two levels one above the other in an individual room. The shown and each optional further storage module 100 comprises a storage area 102 and a top level 104 arranged above the storage area 102, wherein the storage area 102 is adapted to accommodate a plurality of stacks of storage bins (not shown) arranged in a horizontal two-dimensional grid at a bottom 106 of the storage module 100. At the top level 104, at least one vehicle (not shown) may be provided to be movable in alignment with the two-dimensional grid to retrieve and place storage bins from and to the plurality of stacks.

Each storage module 100 of the warehouse system may generally be designed in accordance with the grid structure described above and shown in Figure 1A, i.e., it may comprise a grid structure of storage cells, wherein each storage cell may be adapted to accommodate a vertical stack of storage bins. At the bottom 106 of the storage module 100, the storage cells when arranged in accordance with the horizontal two-dimensional grid 108 enable - together with the vertical stacks of storage bins placeable in the storage cells - a three-dimensional (or "cube-like") arrangement of storage bins. In other words, each cell of the two-dimensional grid 108 at the bottom 106 of the storage module 100 may form a base for a vertical stack of storage bins in the corresponding storage cell. Altogether, the storage cells (including their vertical extension accommodating the stacks) may form the storage area 102 of the storage module 100.

Above the storage area 102 at the top level 104 of the storage module 100 at least one storing and retrieving vehicle (not shown) may be movable in alignment with the two-dimensional grid 108 at the bottom 106 of the storage module 100 to retrieve and place storage bins from and to the plurality of stacks, e.g., by raising an uppermost storage bin from a stack to the top level 104 ("retrieving a storage bin from a stack") or by lowering a storage bin from the top level 104 down onto the stack ("placing a storage bin to the stack"). Placing a storage bin onto the stack may comprise placing the storage bin onto a topmost storage bin of the stack (if the stack is currently non-empty) or placing the storage bin onto a ground surface at the bottom 106 of the storage module 100 reserved for the stack (if the stack is currently empty), i.e., a cell of the two-dimensional grid 108 at the bottom 106 of the storage module 100 forming the base for the stack. To this end, each storing and retrieving vehicle may comprise a lifting mechanism enabling the vehicle to carry out corresponding raising/lowering procedures.

The described warehouse system sometimes requires maintenance of structural and functional system components, for example, cleaning of system components, as well as troubleshooting in case of an error, for example if a bin storing and retrieving vehicle has a defect and/or is immobile within the warehouse system, a bin storing and retrieving vehicle is stuck within the warehouse system, and/or a bin is stuck in the warehouse system.

To allow an operator to perform, inter alia, such maintenance and troubleshooting tasks and/or actions but also to inspect the system and/or for other reasons, Figure 1A shows a service vehicle 300 carrying the operator in a lying position within the storage module 100 at its top level 104. Like the above-mentioned bin placing and retrieving vehicle(s), also the service vehicle 300 uses a grid structure of the top level 104 of the storage module 100 for moving in alignment with the two-dimensional grid 108 at the bottom 106 of the storage module 100, so that, like the storing and retrieving vehicle(s), also the service vehicle 300 may be moved to any position, i.e., any grid cell of the storage module 100. For allowing this movement, the grid structure at the top level 104 is formed of a two-dimensional grid of rails 110 in which rollers 310 of the service vehicle 300, like rollers of the storing and retrieving vehicle(s), are shown to engage (see Figures 1A to 2C), in order for the service vehicle 300 to be movable horizontally in the longitudinal direction and/or in the transverse direction along the top level 104 of the storage module 100.

Figure 1B is a top view of the illustration of the storage module 100 with the service module 300 placed on its top level 104.

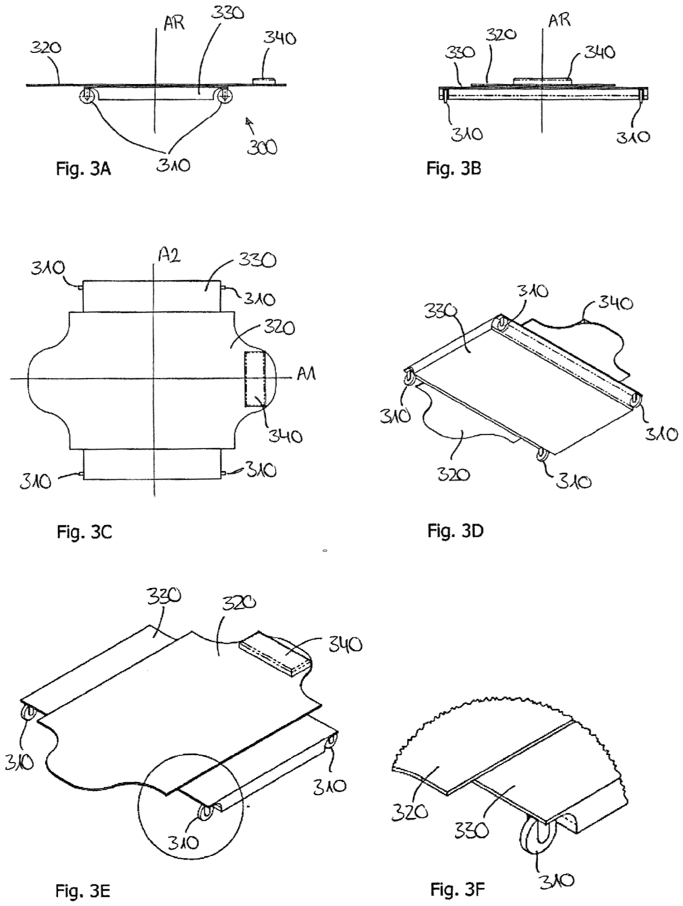

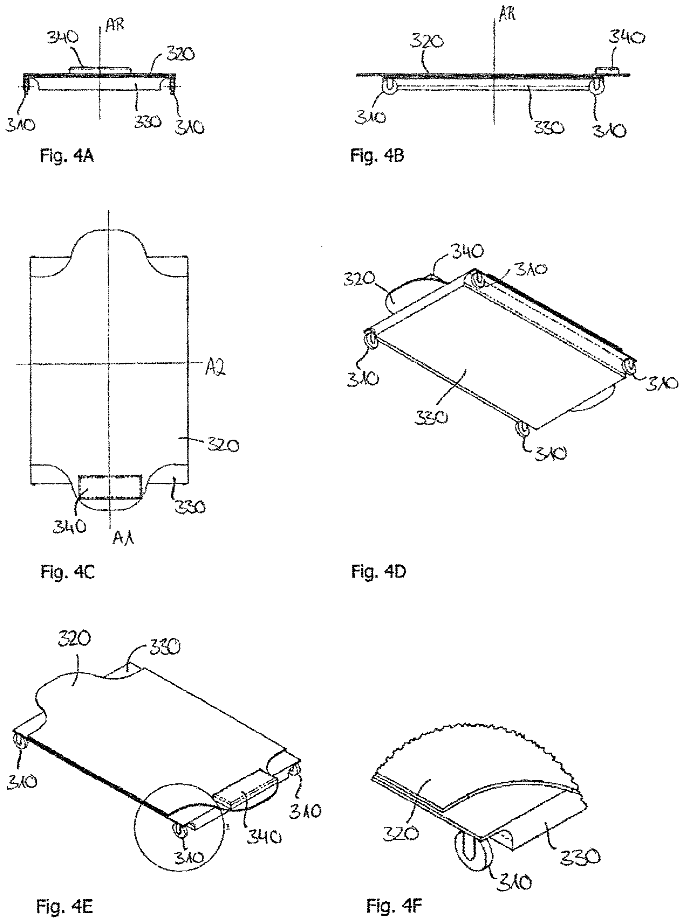

Throughout the figures, the service vehicle 300 is shown to comprise a platform 320 for carrying the operator in a lying position and a base 330. The rollers 310 of the service vehicle 300 are mounted to the base 330 so as to movably support the base 330 on the top level rails 110. The platform 320 is mounted to the base 330 such that the base 330 rotatably supports the platform 320. As shown especially in Figures 3C and 4C, the platform 320 has a length extension along a first axis A1 extending between a first end and an opposite second end thereof and a width extension along a second axis A2 extending between a first side and an opposite second side thereof. The platform 320 is rotatable about a platform rotation axis AR perpendicular to a surface of the platform 320 for carrying the operator, i.e., perpendicular to a plane defined by the first and second axis of the platform 320, and extends through a center point of the surface of the platform 320 (see Figures 3A, 3B and 4A, 4B). The platform plane is parallel to a plane defined by the top level grid rails 110.

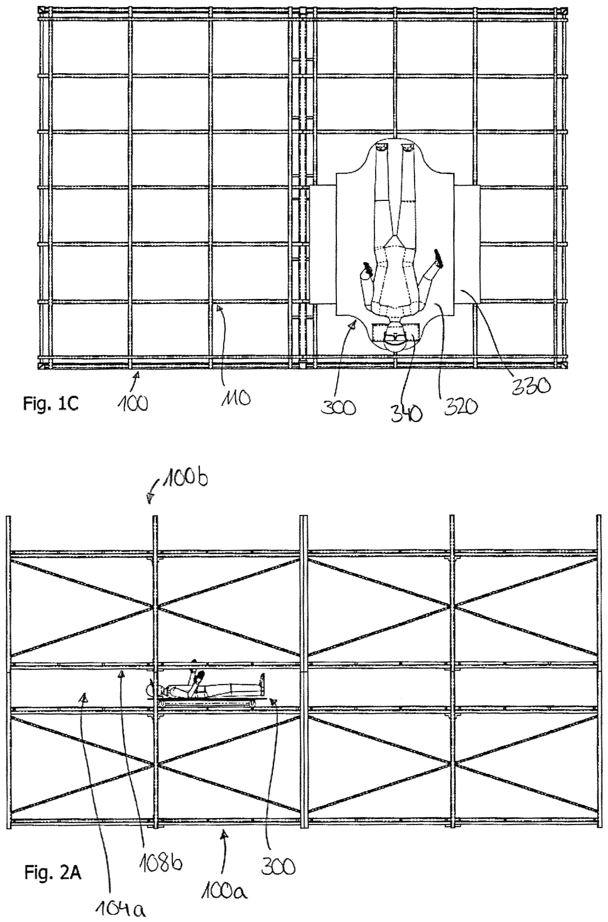

In Figures 1A and 1B (as well as Figures 4A through 4F), the service module 300 is shown with its platform 320 in a first rotational position relative to its base 330, whereas Figure 1C (as well as Figures 3A through 3F) show the service module 300 with its platform 320 in a second rotational position relative to its base 330.

In its first and second rotational positions, the platform 320 can be engaged with a rotation mechanism and/or the base 320 to inhibit unintended further rotation. As shown in the figures, the first and second engagement positions can be 90° apart from one another. Said engagement is releasable. The platform 320 can be released to allow rotation either by an automated control or also manually by the operator carried on the platform. For manual release the service vehicle can, for example, comprise a lever or button manually actuatable by the operator.

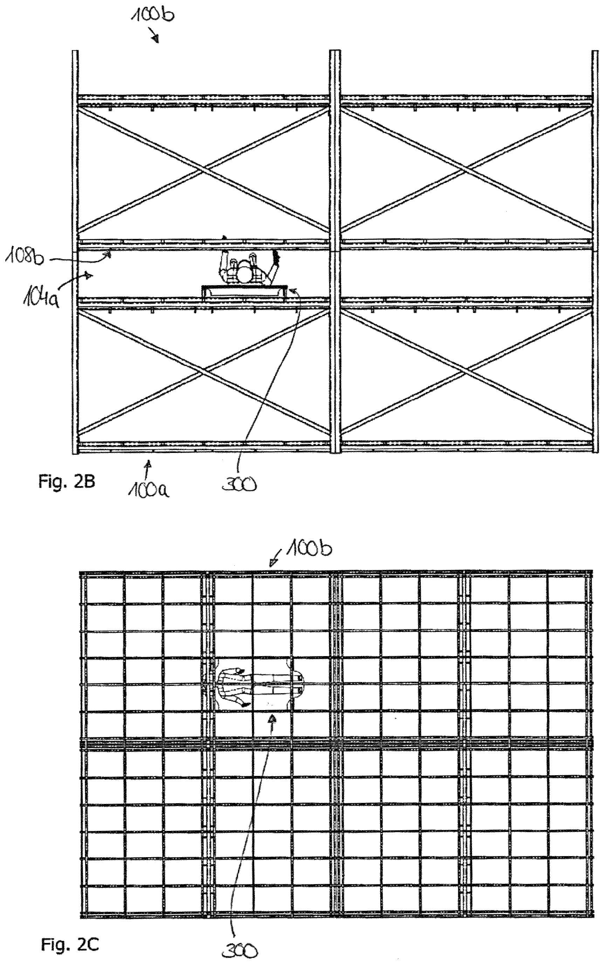

Figure 2A through 2C show a stacked configuration of two levels of eight storage modules of a warehouse system in a 2x2 module arrangement per level with a service vehicle 300 designed as described above and carrying an operator present on a top level 104a of a lower one 100a of the stacked storage modules limited in height by a bottom of an upper one 100b of the stacked storage modules. Each one of the eight shown storage modules 100a, 100b can be designed as generally described above with reference to the storage module 100. The above-described service vehicle 300 is especially designed for use in such a height-limited space, as the platform 320 is designed and adapted to support the operator in a lying position, such as on the back, stomach or side. Therefore, as shown throughout the figures, the platform 320 advantageously can be provided with a head support 340, such as a cushion. Throughout Figures 1A to 2C, the operator is lying on his/her back with the head resting on such a head support 340.

As shown in Figures 2A and 2B for the two-layered arrangement of storage modules, the operator can reach a bottom grid structure 108b of an upper storage module 100b to either do maintenance or troubleshooting work there or push and/or pull him-/herself along the top level 104a of a lower storage module 100a.

As further shown throughout the figures, in opposed first and second end regions of the platform 320, the platform width is reduced to allow the operator's hands to perform maintenance or other tasks below a platform level of the service module 300 when positioned on the rails 110 of the storage module top level 104, such as in the storage area 102 of the storage module 100. In the figures, in lateral sections of the opposed first and second end regions, an outer edge of the platform is curved inwardly towards the first axis A1.

According to Figures 1A to 2C, rails 110 of the storage module top level 104 extend in a grid-like manner in perpendicular directions. To allow the service module 300 to move along either said perpendicular directions, the rollers 310 of the service module 300 are pivotable relative to the base 330 so as to allow selective movement of the service vehicle 300 in either said perpendicular directions. As shown in Figures 3A to 4F, rotation of the platform 320 relative to the base 330 is operatively connected to pivoting of the rollers 310 such that a movement direction of the rollers 310 always is parallel to the longitudinal extension of the platform 320, i.e., its first axis A1.

For the manual operation of the service vehicle 300 as indicated in Figures 2A and 2B by the operator pushing and/or pulling him-/herself and, thus, the service vehicle 300 along the top level 104a, a direction change can also be performed manually by the operator manually rotating the platform 320 and the rotation of the platform 320 causing pivoting of the rollers 310.

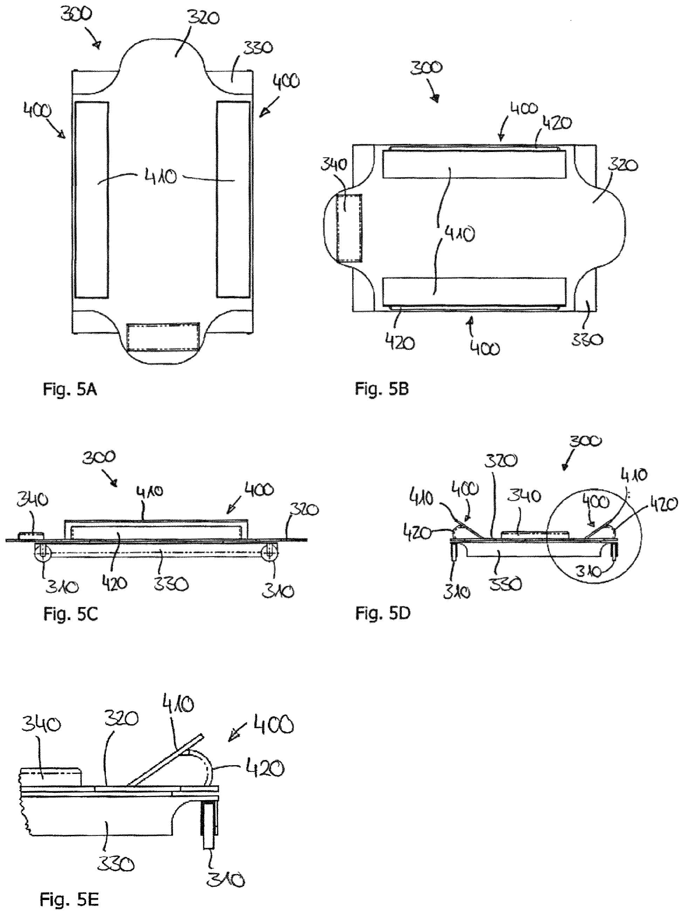

As shown in Figures 5A to 5E, the service vehicle 300 may further comprise limbs securing means 400 comprising two barrier boards 410 pivotally mounted along opposed side sections of the platform 320. These barrier boards 410 are shown to be pneumatically actuatable to move from a non-securing position (Fig. 5A) to a securing position (Figs. 5B to 5E) relative to the platform 320. In the non-securing position (Fig. 5A), the barrier boards 410 abut the platform 320 and, thus, do not limit an operating range of an operator when carried by the platform 320. In the securing position (Figs. 5B to 5E), the barrier boards 410 are pivoted upwards towards an operator when lying on the platform 320 to thereby limit the width extension of the operator range and/or a space occupiable by the operator on the platform. With the barrier boards 410 moving from the non-securing to the securing position, limbs of the operator positioned outside the limits of the limited operating range set by the barrier boards 410 when in securing position to be led into said limits.

For the pneumatic actuation of the barrier boards 410, the limbs securing means 400 is provided with an inflatable cushion 420 per barrier board 410 and comprises a gas pressure accumulator (not shown), especially a carbon dioxide pressure bottle, fluidly connected via respective gas pressure regulation valves (also not shown) to the inflatable cushions 420 for immediately inflating the cushions 420, if necessary, such as in an emergency situation, in a controlled manner to move the barrier boards 410 into the securing position.

It is believed that the advantages of the service vehicle and warehouse system presented herein will be fully understood from the foregoing description, and it will be apparent that various changes may be made in the form, constructions and arrangement of the exemplary aspects thereof without departing from the scope of the disclosure or without sacrificing all of its advantageous effects. Because the service vehicle and warehouse system presented herein can be varied in many ways, it will be recognized that the disclosure should be limited only by the scope of the claims that follow.

## Claims

1. A service vehicle (300) for use in a warehouse system comprising at least one storage module (100, 100a, 110b) having a storage area (102) adapted to accommodate a plurality of stacks of storage bins, and a top level (104, 104a) arranged above the storage area (102), wherein the service vehicle (300) is configured for movement at the top level (104, 104a) of the storage module (100, 100a, 100b) and comprises:
rollers (310) engageable in rails (110) extending at the top level (104, 104a),
and
a platform (320) for carrying an operator, the platform designed for carrying the operator in a lying position,
wherein, when the rollers (310) engage in the top level rails (110) of the storage module (100, 100a, 100b), the service vehicle (300) is movable along said rails (110) at the top level (104, 104a) of the storage module (100, 100a, 100b) with an operator carried by the platform (320).

2. The service vehicle (300) of claim 1 further comprising a vehicle control for controlling movement and operation of the vehicle (300).

3. The service vehicle (300) of claim 2, wherein the control is designed to selectively allow manually operated or drive controlled movement of the vehicle (300).

4. The service vehicle (300) of claim 3, wherein the control is designed to provide for automatic retrieval of the vehicle (300) from a position within the top level (104, 104a) of the warehouse system to an access position of the top level (104, 104a) at least in case of an emergency, wherein the automatic retrieval control preferably is a sensor-based or a remote control.

5. The service vehicle (300) of any one of claims 2 to 4, wherein the control is adapted to communicate with sensors of the vehicle (300) and/or with a main control of the warehouse system.

6. The service vehicle (300) of any one of claims 1 to 5 further comprising a base (330), wherein the rollers (310) are mounted to the base (330) so as to movably support the base (330) and wherein the platform (320) is mounted to the base (330) such that the base (330) supports the platform (320).

7. The service vehicle (300) of any one of claims 1 to 6, wherein the platform (320) is movably and preferably rotatably mounted to the base (330).

8. The service vehicle (300) of claim 6 or 7, wherein the rails (110) at the top level (104, 104a) extend in a grid-like manner in perpendicular directions, and wherein the rollers (310) are pivotable relative to the base (330) so as to allow selective movement of the vehicle (300) in either said perpendicular directions in which the rails (110) extend at the top level (104, 104a).

9. The service vehicle (300) of claim 8, wherein the platform (320) is rotatable relative to the base (330), and wherein a platform rotation mechanism and a roller pivoting mechanism of the base (330) are operatively connected such that rotation of the platform (320) relative to the base (330) causes the rollers (310) to pivot relative to the base (330) and/or pivoting of the rollers (310) relative to the base (330) causes rotation of the platform (320) relative to the base (330).

10. The service vehicle (300) of any one of claims 1 to 9, further comprising a limbs securing means (400).

11. The service vehicle (300) of claim 10, wherein the limbs securing means (400) is movably mounted to the platform (320) and comprises an actuating means (420) for moving the limbs securing means (400) into a securing position, the actuating means (420) preferably being at least one inflatable cushion.

12. The service vehicle (300) of claim 10 or 11, wherein the limbs securing means (400) comprises at least one barrier (410) selectively positionable to laterally limit a space occupiable by the operator on the platform in the securing position of the limbs securing means (400).

13. The service vehicle (300) of claim 12, wherein at least one barrier (410) is pivotably mounted to a surface of the platform (320) in a first lateral region of the platform (320) extending in parallel to a longitudinal axis (A1) of the platform (320) and at least one barrier (410) is pivotably mounted to the surface of the platform (320) in a second lateral region opposite the first lateral region, the surface carrying the operator when present on the vehicle (300).

14. A warehouse system comprising at least one storage module (100, 100a, 100b) having a storage area (102) adapted to accommodate a plurality of stacks of storage bins, and a top level (104, 104a) arranged above the storage area (102), as well as a service vehicle (300) according to any one of claims 1 to 13 configured for movement at the top level (104, 104a) of the storage module (100,100a, 100b).

15. The warehouse system of claim 14 comprising at least two storage modules (100, 100a, 100b) connected to each other in a stacked arrangement one above to the other with a height of the top level (104, 104a) of the lower storage module (100a) being delimited by a bottom (108b) of the upper storage module (100b), wherein, for the service vehicle (300) being positioned on the top level (104a) of the lower storage module (100a), a dimension of the service vehicle (300) is such that a space available between the platform (320) of the service vehicle (300) and the bottom (108b) of the upper storage module (100b) does not allow the operator to sit or stand on the platform (320).
